# FASCICULE DE BREVET EUROPEEN

(11) **EP 0 709 349 B1**
(45) Date de publication et mention de la délivrance du brevet: **21.07.1999**
(21) Numéro de dépôt: 95402370.1
(22) Date de dépôt: 24.10.1995
(51) Int. Cl.: C03C 17/36

(54) **Substrat transparent muni d'un empilement de couches d'argent, application aux vitrages feuilletes chauffants**
Transparentes Substrat mit einer Häufung von Schichten aus Silber, Verwendung als heizbare Verbundglasscheibe
Transparent substrate with a stack of silver layers; application as laminated heating window

(30) Priorité: 25.10.1994 FR 9412748
(43) Date de publication de la demande: 01.05.1996
(73) Titulaire: SAINT-GOBAIN VITRAGE, 92400 Courbevoie (FR)
(72) Inventeur: Chaussade, Pierre, F-45600 Sully Sur Loire (FR); Rigal, Françoise, F-45600 Sully Sur Loire (FR)
(74) Mandataire: Muller, René

(56) Documents cités:
- EP-A- 0 031 278
- EP-A- 0 050 199
- EP-A- 0 332 717
- EP-A- 0 336 257
- EP-A- 0 593 883
- FR-A- 2 219 126

## Description

L'invention concerne les substrats transparents recouverts de couches minces multiples et comportant des couches d'argent et des couches diélectriques.

Les substrats du type précédent sont utilisés essentiellement pour réaliser des vitrages isolants ou des vitrages feuilletés dont les fonction sont l'isolation thermique renforcée, la protection solaire, le chauffage par effet Joule dans la couche ou la protection électromagnétique.

Selon les domaines d'application, les performances optiques des substrats sont différentes. En particulier, la transmission lumineuse pourra être moyenne dans le cas de la protection solaire alors qu'on la recherchera maximum dans le cas par exemple d'un pare-brise de véhicule. C'est à ce dernier domaine qu'appartient le substrat de l'invention.

En général, avec les couches multiples comportant des couches d'argent, les bonnes performances de réflexion infrarouge qui contribuent à la protection solaire et à la basse émissivité, exploitée dans l'isolation thermique s'accompagnent d'une conductivité électrique élevée. Un problème courant avec de tels ensembles de couches comportant des couches d'argent est d'obtenir une bonne performance pour les critères précédents avec une transmission lumineuse élevée. En particulier dans le cas des pare-brise chauffants pour automobiles ou pour véhicules ferroviaires, militaires ou en aviation, on souhaite souvent avoir une résistance par carré inférieure à 5 Ω avec des transmissions lumineuses très élevées, par exemple supérieures à 75 % avec l'illuminant A dans le cas de l'automobile.

Il est connu d'utiliser l'or comme métal pour avoir de bonnes performances dans le domaine précédent. Une couche mince d'or est alors placée entre deux couches de diélectriques par exemple en oxyde de bismuth ou en oxyde de titane. Les couches à l'or ont une bonne conduction électrique mais elles manquent de neutralité, en transmission comme en réflexion. Leur couleur en transmission est jaune verdâtre et elles ont une réflexion forte et très colorée dont la couleur dépend des épaisseurs de diélectriques adoptées. Mais quelles qu'elles soient la réflexion n'est jamais neutre.

La mission confiée à l'invention est de permettre la fabrication par les techniques d'évaporation thermique sous vide d'une couche moins chère que la couche à l'or mais avec des performances meilleures dans le domaine visible - en particulier pour les couleurs en transmission et en réflexion - sans que les autres performances liées à la réflexion infrarouge soient moins bonnes que celles de la couche à l'or.

Il est connu de la demande de brevet WO 90/02653 un vitrage feuilleté destiné à l'automobile et dont le substrat de verre le plus «extérieur» par rapport à l'habitacle du véhicule est muni d'un empilement de cinq couches sur sa face interne en contact avec l'intercalaire en matériau thermoplastique. Cet empilement consiste en deux couches d'argent intercalées avec trois couches d'oxyde de zinc, la couche d'argent la plus proche du substrat extérieur porteur de l'empilement étant d'une épaisseur légèrement supérieure à celle de la seconde couche d'argent.

Les vitrages feuilletés selon cette demande sont utilisés en tant que pare-brise, ce qui explique pourquoi ils présentent des valeurs de transmission lumineuse T_{L} de l'ordre de 70 %, afin de respecter les normes de sécurité en vigueur aux Etats-Unis. Et dans un cas, la valeur de 75 % est atteinte. La technique de dépôt proposée est la pulvérisation cathodique réactive. Avec cette technique, il est possible de déposer les diélectriques proposés qui sont tous des oxydes. Mais parmi ceux-ci plusieurs sont des oxydes réfractaires ou peu stables, avec plusieurs états d'oxydation possibles ce qui les rend peu adaptés à la technique d'évaporation sous vide.

Dans le document EP-A-0 031 278, on propose un filtre optique interférentiel de protection contre les radiations infrarouges dont la bande passante est située dans le visible et centrée sur le maximum de sensibilité de l'oeil, comprenant un support au moins partiellement transparent dans ladite bande sur une face duquel est déposé un filtre optique et dans lequel le filtre est constitué de n éléments filtrants comportant chacun une couche de métal interposée entre deux couches d'un matériau diélectrique transparent à haut indice de réfraction, n étant un nombre entier supérieur ou égal à 3. Il est également proposé que la couche de métal soit en argent et le diélectrique, en sulfure de zinc. Mais, comme l'épaisseur du métal est supérieure à 20 nm et le nombre de ses couches, d'au moins 3, la transmission en est particulièrement faible.

On connaît également par le document EP-A-0 433 136 des couches minces superficielles qui favorisent l'accrochage d'un ensemble de couches sur la feuille intercalaire thermoplastique d'un vitrage feuilleté, elles sont en particulier en titane, nickel-chrome ou tantale ou en oxyde de ces métaux.

Dans la demande de brevet européen N° 94-401 846.4, on propose un substrat transparent, notamment en verre, à multicouches minces sur lequel sont déposés successivement :
* un premier revêtement en matériau diélectrique,
* une première couche à propriétés de réflexion dans infrarouge, notamment à base de métal,
* un second revêtement en matériau diélectrique,
* une seconde couche à propriétés de réflexion dans infrarouge, notamment à base de métal,
* un troisième revêtement en matériau diélectrique, le substrat ayant une épaisseur de la première couche à propriétés de réflexion dans infrarouge qui correspond à environ 55 à 75 %, et de préférence 60 à 70 %, et notamment environ 65 % de celle de la seconde couche à propriétés de réflexion dans l'infrarouge.

Dans ce document, les couches à propriétés de réflexion dans infrarouge sont en argent et les diélectriques, des oxydes, également obtenus par pulvérisation cathodique. Ce document, par ailleurs, ne s'attachait pas particulièrement à l'obtention d'une couche conductrice.

La présente invention propose un substrat transparent notamment en verre, à multicouches minces comportant deux couches d'argent alternées avec trois couches de diélectriques , la couche d'argent la plus proche du substrat étant plus mince que l'autre couche d'argent et où les couches diélectriques sont en sulfure de zinc. De préférence, l'épaisseur de la couche diélectrique intermédiaire est supérieure ou égale à 1,1 fois la somme des épaisseurs des deux autres couches diélectriques et les épaisseurs de la première couche de diélectrique et de la troisième couche de diélectrique sont approximativement égales. Elles sont notamment de l'ordre de 28 nm. Il est également prévu que le substrat de l'invention comporte à sa surface une couche faite en un des métaux du groupe IV, V ou VIII, en un de leurs alliages ou en un oxyde des mêmes métaux ou alliages et en particulier en titane.

L'invention propose que le substrat avec ses couches soit assemblé avec un deuxième substrat transparent à l'aide d'un film thermoplastique, alors, de préférence, il comporte une couche superficielle en un des métaux du groupe IV, V ou VIII, en un de leurs alliages ou en un oxyde des mêmes métaux ou alliages. Ainsi, par exemple, la couche superficielle est à base de titane et/ou d'oxyde de titane.

Les couches de l'invention sont déposées par une technique d'évaporation thermique sous vide. Et le substrat de l'invention est prévu pour la réalisation d'un vitrage de véhicule et particulièrement d'un vitrage chauffant.

Les figures et la description qui suivent permettront de comprendre l'invention et d'en saisir les avantages.

Parmi les figures,
la **figure 1** présente le substrat de l'invention avec son empilement de couches et,
la **figure 2** le même substrat associé à un autre substrat transparent par un film thermoplastique pour constituer un vitrage feuilleté.

Pour revêtir un substrat tel qu'une plaque de verre, plane ou bombée, du système de couches de l'invention, on procède de la manière suivante :

On dispose d'une enceinte à vide dans laquelle on peut faire des évaporations thermiques, c'est-à-dire qu'on y dispose d'au moins un creuset chauffant.

Le creuset pour l'argent comme celui pour le ZnS est constitué d'une feuille de molybdène pliée pour constituer une forme régulière dite celle du «creuset-cube». Le creuset pour le titane ou les autres métaux des couches externes est une hélice de fil de tungstène. Les trois creusets sont situés à 440 mm du substrat. Celui-ci est une plaque de verre de 2 mm d'épaisseur d'une dimension de 400 sur 1200 mm, la plaque est installée horizontalement au-dessus du creuset, elle est animée d'un mouvement rapide dans son plan tel qu'il permet un dépôt uniforme.

Le contrôle des différentes évaporations s'effectue par l'intermédiaire d'un photomètre muni d'un filtre à 550 nm qui suit la valeur de la transmission in situ au cours du procédé.

Le procédé d'évaporation nécessite d'abord une phase de préchauffage des creusets ainsi qu'une étape de préparation des surfaces (effluvage).

Le procédé comporte les étapes suivantes :
* descente en vide jusqu'à 5.10⁻⁵ bar
les creuset qui ont été chargés respectivement de titane, de ZnS et d'argent sont alors préchauffés :
* préchauffage des creusets :

| | | |
|---|---|---|
| Ti | 120 Volts | 3 minutes |
| ZnS | 100 Volts | 3 minutes |
| Ag | 50 Volts | 3 minutes |

* effluvage à 2,5.10⁻⁵ mbar à 5 Ampères pendant 10 minutes (le débit d'Argon est ajusté en conséquence)
* évaporation à 2,5.10⁻⁵ dans les conditions suivantes :

| | |
|---|---|
| Ti | 320 Volts |
| ZnS | 215 Volts |
| Ag | 230 Volts |

Une solution pour résoudre les problèmes de couleur en réflexion et augmenter la fonction antisolaire d'une couche à base d'argent consiste à effectuer deux dépôts d'argent au lieu d'un.

Le système de couches choisi est ainsi : Ti, ZnS, Ag, ZnS, Ag, ZnS, Ti

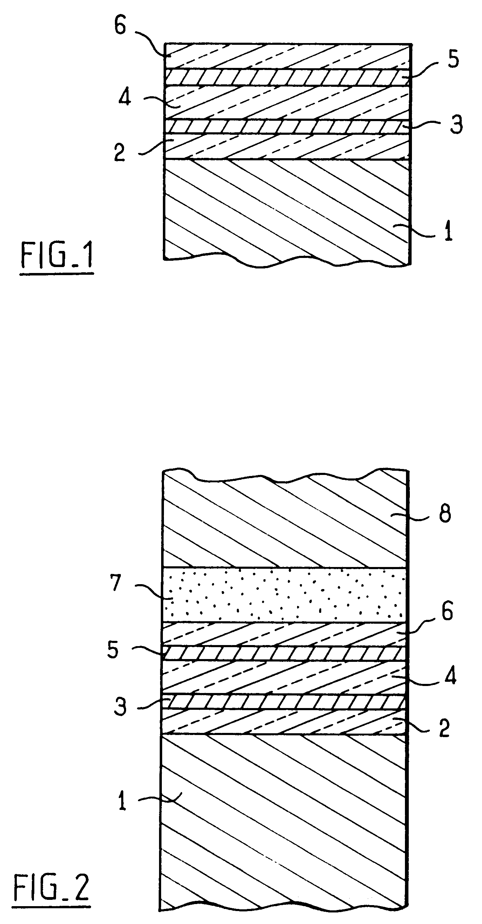

Sur la **figure 1** on n'a pas représenté les couches de titane, on voit en 1 le substrat transparent, en 2 la première couche de ZnS et en 4 et 6 les deuxièmes et troisièmes couches du même diélectrique. Tandis qu'en 3 et 5 on a représenté les couches d'argent.

La sous-couche et la sur-couche de titane sont très minces et, comme l'évolution de leur transmission le montre, se transforment rapidement en oxydes. Elles constituent des couches «d'accrochage» qui permettent l'adhérence du ZnS au substrat et, dans l'assemblage feuilleté, de la feuille thermoplastique au même ZnS.

Des essais ont été faits pour remplacer le titane par d'autres métaux du groupe IV (Sn) et des groupes V (Bi, Nb, Ta) ainsi que du groupe VIII (Ni) qui ont donné également de bons résultats.

Le contrôle des transmissions de l'échantillon à la longueur d'onde de 550 nm permet d'arrêter l'évaporation au moment voulu.

C'est ainsi que pour obtenir une optimisation de la transmission lumineuse T_{L} et de la transmission énergétique T_{E}, il fallait limiter les transmissions T₅₅₀ aux valeurs suivantes :
1. Ti : : 97 %
2. ZnS : 82 %
3. Ag : 73 %
4. ZnS : 79 %
5. Ag : 73 %
6. ZnS : 79 %
7. Ti : 74 %

Une telle couche a été expertisée. Les épaisseurs de ses constituants étaient en référence à la **figure 1** :
Couche ZnS 2 : 28 nm
Couche Ag 3 : 10 nm
Couche ZnS 4 : 62 nm
Couche AG 5 : 12 nm
Couche ZnS 6 : 28 nm

les sous-couches et sur-couches de titane avaient, elles, une épaisseur d'environ 1 nm.

Le substrat précédent a été assemblé selon la méthode habituelle avec une plaque identique 8 mais démunie de couches, à l'aide polyvinylbutyral (PVB) 7, **figure 2**.

C'est sur cet échantillon feuilleté que les performances optiques et électriques ont été mesurées, la couche étant sur la face interne du premier verre.

Les résultats sont les suivants :
Transmission lumineuse, illuminant A, T_{L} = 75 %
Transmission énergétique solaire T_{E} = 43 %
Réflexion côté verre à couche R_{L} = 7 %
Réflexion énergétique R_{E} = 28 %
Résistance par carré R_{□} = 3,6 Ω

Les résultats sont peu différents de ceux d'une couche à l'or à l'exception des réflexions qui sont beaucoup plus faibles ici, ce qui est très intéressant pour les applications dans les véhicules. Par ailleurs, la transmission et la réflexion visibles sont sensiblement moins colorées (pureté de l'ordre de 1 % comparé à 20 % pour l'or en transmission).

Le produit obtenu présente ainsi une solution très satisfaisante au problème d'une couche efficace avec un rapport T_{L}/T_{E} très grand et donc favorable à une bonne performance en protection solaire en particulier dans l'automobile. De même, le grand rapport T_{L}/ R_{□} permet une grande efficacité en vitrage chauffant, spécialement dans les vitrages de véhicules. Ces performances sont obtenues avec des méthodes de production par évaporation thermique classiques et avec des prix de revient réduits (absence d'or).

## Revendications

1. Substrat transparent (1) notamment en verre, à multicouches minces comportant deux couches d'argent (3, 5) alternées avec trois couches de diélectriques (2, 4, 6), la couche d'argent (3) la plus proche du substrat étant plus mince que l'autre couche d'argent (5), **caractérisé en ce que** les couches diélectriques sont en sulfure de zinc.

2. Substrat selon la revendication 1, **caractérisé en ce que** l'épaisseur de la couche diélectrique intermédiaire (4) est supérieure ou égale à 1,1 fois la somme des épaisseurs des deux autres couches diélectriques (2, 6).

3. Substrat selon la revendication 2, **caractérisé en ce que** les épaisseurs de la première couche de diélectrique (2) et de la troisième couche de diélectrique (6) sont approximativement égales.

4. Substrat selon la revendication 3, **caractérisé en ce que** les épaisseurs approximativement égales des premier et troisième revêtements sont de l'ordre de 28 nm.

5. Substrat selon l'une quelconque des revendications précédentes, **caractérisé en ce qu'**il comporte à sa surface une couche faite en un des métaux du groupe IV, V ou VIII, en un de leurs alliages ou en un oxyde des mêmes métaux ou alliages et en particulier en titane.

6. Substrat selon l'une des revendications précédentes, **caractérisé en ce qu'**il est assemblé avec un deuxième substrat transparent (8) à l'aide d'un film thermoplastique (7).

7. Substrat selon la revendication 6, **caractérisé en ce qu'**il comporte une couche superficielle en un des métaux du groupe IV, V ou VIII, en un de leurs alliages ou en un oxyde des mêmes métaux ou alliages.

8. Substrat selon la revendication 7, **caractérisé en ce que** la couche superficielle est à base de titane et/ou d'oxyde de titane.

9. Substrat selon l'une des revendications précédentes, **caractérisé en ce que** les couches sont déposées par une technique d'évaporation thermique sous vide.

10. Application du substrat selon l'une des revendications 5 à 9 à la réalisation d'un vitrage de véhicule.

11. Application selon la revendication 10 à la réalisation d'un vitrage de véhicule chauffant.

## Claims

1. Transparent substrate (1), especially made of glass, having thin multilayers comprising two silver layers (3, 5) alternating with three dielectric layers (2, 4, 6), the silver layer (3) closest to the substrate being thinner than the other silver layer (5), **characterized in that** the dielectric layers are made of zinc sulphide.

2. Substrate according to Claim 1, **characterized in that** the thickness of the intermediate dielectric layer (4) is greater than or equal to 1.1 times the sum of the thicknesses of the two other dielectric layers (2, 6).

3. Substrate according to Claim 2, **characterized in that** the thicknesses of the first dielectric layer (2) and the third dielectric layer (6) are approximately equal.

4. Substrate according to Claim 3, **characterized in that** the approximately equal thicknesses of the first and third coatings are about 28 nm.

5. Substrate according to any one of the preceding claims, **characterized in that** it includes, on its surface, a layer made of one of the metals of Group IV, V or VIII, of one of their alloys or of an oxide of the same metals or alloys, and in particular made of titanium.

6. Substrate according to one of the preceding claims, **characterized in that** it is joined together with a second transparent substrate (8) with the aid of a thermoplastic film (7).

7. Substrate according to Claim 6, **characterized in that** it includes a surface layer made of one of the metals of Group IV, V or VIII, or of one of their alloys or of an oxide of the same metals or alloys.

8. Substrate according to Claim 7, **characterized in that** the surface layer is based on titanium and/or on titanium oxide.

9. Substrate according to one of the preceding claims, **characterized in that** the layers are deposited using a vacuum thermal evaporation technique.

10. Application of the substrate according to one of Claims 5 to 9 to the production of a vehicle window.

11. Application according to Claim 10 to the production of a heated vehicle window.

## Patentansprüche

1. Transparentes Substrat (1), insbesondere aus Glas, mit mehreren dünnen Schichten, welche zwei Silberschichten (3, 5) im Wechsel mit drei dielektrischen Schichten (2, 4, 6) umfassen, wobei die dem Substrat am nächsten liegende Silberschicht (3) dünner als die andere Silberschicht (5) ist, dadurch gekennzeichnet, daß die dielektrischen Schichten aus Zinksulfid bestehen.

2. Substrat nach Anspruch 1, dadurch gekennzeichnet, daß die Dicke der dielektrischen Zwischenschicht (4) größer oder gleich dem 1,1-fachen der Summe der Dicken der beiden anderen dielektrischen Schichten (2, 6) ist.

3. Substrat nach Anspruch 2, dadurch gekennzeichnet, daß die Dicken der ersten dielektrischen Schicht (2) und der dritten dielektrischen Schicht (6) annähernd gleich sind.

4. Substrat nach Anspruch 3, dadurch gekennzeichnet, daß die annähernd gleichen Dicken der ersten und der dritten Schicht etwa 28 nm betragen.

5. Substrat nach irgendeinem der vorstehenden Ansprüche, dadurch gekennzeichnet, daß es auf seiner Oberfläche eine Schicht umfaßt, welche aus einem der Metalle der Gruppen IV, V oder VIII, aus einer von deren Legierungen oder aus einem Oxid derselben Metalle oder Legierungen und insbesondere aus Titan besteht.

6. Substrat nach einem der vorstehenden Ansprüche, dadurch gekennzeichnet, daß es mit Hilfe einer thermoplastischen Folie (7) mit einem zweiten transparenten Substrat (8) vereinigt ist.

7. Substrat nach Anspruch 6, dadurch gekennzeichnet, daß es eine Oberflächenschicht enthält, welche aus einem der Metalle der Gruppen IV, V oder VIII, aus einer von deren Legierungen oder aus einem Oxid derselben Metalle oder Legierungen besteht.

8. Substrat nach Anspruch 7 , dadurch gekennzeichnet, daß die Oberflächenschicht auf der Basis von Titan und/oder Titanoxid hergestellt ist.

9. Substrat nach einem der vorstehenden Ansprüche, dadurch gekennzeichnet, daß die Schichten durch eine thermische Vakuum-Verdampfungstechnik aufgebracht werden.

10. Anwendung des Substrats nach einem der Ansprüche 5 bis 9 zum Herstellen einer Fahrzeugfensterscheibe.

11. Anwendung nach Anspruch 10 zum Herstellen einer heizbaren Fahrzeugfensterscheibe.
